# FASCICULE DE BREVET EUROPEEN

(11) **EP 1 327 808 B1**
(45) Date de publication et mention de la délivrance du brevet: **21.02.2007**
(21) Numéro de dépôt: 02293127.3
(22) Date de dépôt: 17.12.2002
(51) Int. Cl.: F16K 31/06, F16B 21/16

(54) **Perfectionnements apportés aux électrovannes**
Verbesserungen am Elektroventil
Improvements in electrovalves

(30) Priorité: 15.01.2002 FR 0200437
(43) Date de publication de la demande: 16.07.2003
(73) Titulaire: Asco Joucomatic, 92500 Rueil Malmaison (FR)
(72) Inventeur: Solet, Daniel, 28170 Saint Sauveur Levasville (FR); Courpron, Bernard, 28210 Nogent le Roi (FR); Vandamme, Richard, 28300 Mainvilliers (FR)
(74) Mandataire: Peaucelle, Chantal

(56) Documents cités:
- FR-A- 2 267 009
- FR-A- 2 795 494
- US-A- 4 552 179

## Description

La présente invention est relative à des perfectionnements apportés aux électrovannes.

Elle se réfère plus particulièrement aux électrovannes comportant un sous-ensemble électro-aimant et un sous-ensemble de commutation pneumatique à clapet, qui est associé mécaniquement audit sous-ensemble électro-aimant, le sous-ensemble de commutation pneumatique étant constitué d'un corps enfermant le clapet emprisonné entre deux sièges d'étanchéité en vis-à-vis, le mouvement dudit clapet étant provoqué d'une part par un ressort situé dans le noyau mobile du sous-ensemble électro-aimant, par l'intermédiaire d'un poussoir, et d'autre part par un moyen venant plaquer le clapet sur le siège supérieur du sous-ensemble de commutation pneumatique lorsque l'électro-aimant est alimenté.

Une telle électrovanne est par exemple connue du document US-A-4 552 179.

L'un des problèmes techniques qui se pose lors de la conception de telles électrovannes est celui de l'assemblage du sous-ensemble électro-aimant sur le sous-ensemble de commutation pneumatique. En effet, un tel assemblage doit répondre notamment aux exigences ci-après :
- facilité de mise en oeuvre et d'automatisation de l'assemblage ;
- faible coût de revient ;
- indémontabilité ;
- possibilité d'utilisation de l'assemblage sur des pièces usinées.

Certaines de ces exigences sont contradictoires notamment la possibilité d'utiliser l'assemblage sur des pièces usinées, qualité qui se traduit généralement par une augmentation des coûts.

L'invention s'est fixé pour objectif d'apporter une électrovanne qui résout tous ces problèmes techniques en apportant en outre d'autres avantages qui seront spécifiés ci-après.

L'électrovanne objet de la présente invention est caractérisée en ce que son sous-ensemble électro-aimant comporte au niveau de son plan d'assemblage sur le sous-ensemble de commutation pneumatique, quatre plots cylindriques munis chacun d'une cavité transversale aménagée sur la génératrice et se terminant par un tronc de sphère et en ce que le sous-ensemble de commutation pneumatique comporte, au niveau de son plan d'assemblage avec le sous-ensemble électro-aimant, quatre cavités cylindriques, conçues de façon à recevoir les plots du sous-ensemble électro-aimant, des cavités transversales étant aménagées sur le corps du sous-ensemble de commutation pneumatique, ces cavités venant mourir sur la génératrice respective des cavités recevant les plots et, l'ensemble de chacune desdites cavités se termine par un tronc de sphère, de façon qu'après assemblage des deux sous-ensembles, les cavités transversales des plots du sous-ensemble électro-aimant tombent en regard des cavités transversales dudit sous-ensemble de commutation pneumatique en délimitant des logements, recevant chacun une bille .

Selon la présente invention, chaque cavité transversale du sous-ensemble de commutation pneumatique présente un diamètre inférieur au diamètre des billes.

Selon une autre caractéristique de l'électrovanne objet de l'invention, le moyen venant plaquer le clapet sur le siège supérieur du sous-ensemble de commutation pneumatique est réalisé sous la forme d'une fonction « rappel élastique » intégrée dans le poussoir-clapet.

Selon encore une autre caractéristique de cette invention, l'électrovanne comporte une commande manuelle qui est constituée d'une pièce de forme cylindrique assurant, d'une part le déplacement du clapet du siège inférieur vers le siège supérieur et, d'autre part l'étanchéité du sous-ensemble de commutation pneumatique par une fonction d'étanchéité intégrée dans cette commande manuelle.

Selon l'invention, ladite commande manuelle peut être munie d'un moyen de rappel, assurant son retour en position initiale lorsqu'elle n'est plus actionnée, ce moyen de rappel étant réalisé sous la forme d'une lame en acier à ressort qui est encastrée à l'une de ses extrémités dans le corps du sous-ensemble de commutation pneumatique et qui est logée, à son autre extrémité, dans la gorge de retenue de la commande manuelle. L'extrémité de cette lame qui est encastrée dans le corps du sous-ensemble de commutation pneumatique est de préférence munie d'ergots de retenue.

D'autres caractéristiques et avantages de la présente invention ressortiront de la description faite ci-après, en référence aux dessins annexés qui en illustrent des exemples de réalisation dépourvus de tout caractère limitatif. Sur les dessins :
- les figures 1a et 1b représentent respectivement, en élévation frontale et latérale, le sous-ensemble électro-aimant de l'électrovanne objet de l'invention ;
- les figures 2a et 2b représentent respectivement, en élévation latérale et en plan, le sous-ensemble de commutation pneumatique de l'électrovanne selon l'invention ;
- les figures 3a à 3c sont des vues en élévation frontale représentant les différentes phases de l'assemblage du sous-ensemble électro-aimant sur le sous-ensemble de commutation pneumatique ;
- la figure 4 est une vue en élévation latérale de l'assemblage ainsi réalisé ;
- la figure 4a représente, à échelle agrandie, un détail de la figure 4 ;
- la figure 5 est une vue en coupe axiale verticale de l'électrovanne objet de l'invention, illustrant un exemple de réalisation de la liaison élastique entre le clapet du sous-ensemble de commutation pneumatique et le noyau mobile du sous-ensemble électro-aimant ;
- la figure 6 est une vue en perspective de la liaison élastique mise en oeuvre dans l'électrovanne illustrée par la figure 5 ;
- la figure 7 est une vue en coupe axiale verticale d'une électrovanne comportant un autre exemple de réalisation de cette liaison élastique ;
- la figure 8 est une vue en perspective de la liaison élastique mise en oeuvre dans l'électrovanne illustrée par la figure 7 ;
- la figure 9 est une vue en coupe axiale verticale d'une électrovanne comportant une commande manuelle intégrant une fonction d'étanchéité ;
- la figure 9a représente, à échelle agrandie, le détail de cette commande manuelle selon la figure 9 ;
- la figure 10 représente en perspective cette commande manuelle ;
- la figure 11 est une vue en coupe axiale verticale d'une électrovanne comportant un autre exemple de réalisation d'une commande manuelle intégrant une fonction d'étanchéité ;
- la figure 11 a représente, à échelle agrandie, le détail de cette commande manuelle selon la figure 11 ;

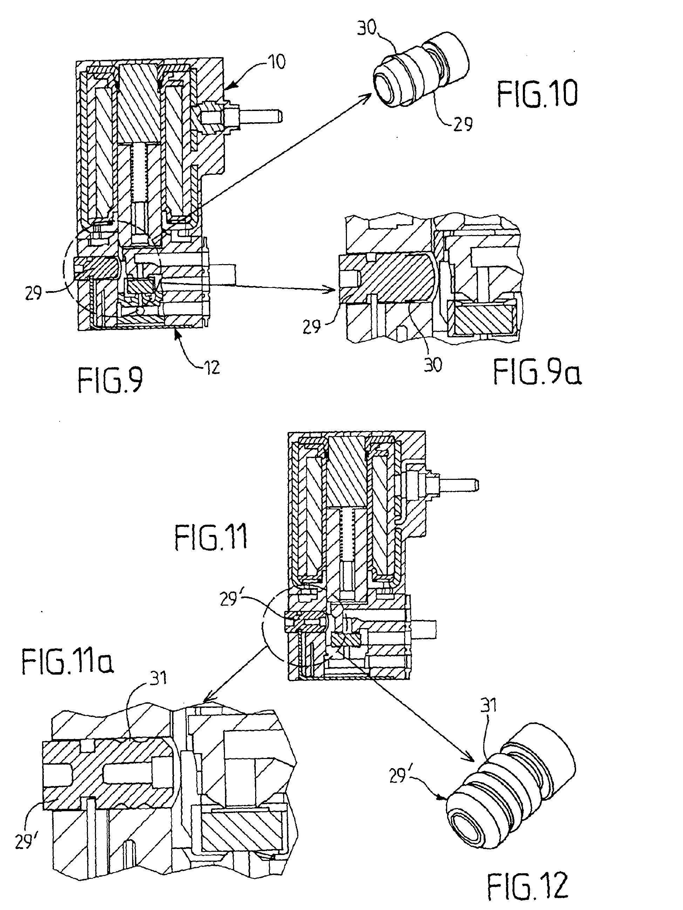

- la figure 12 représente en perspective cette commande manuelle ;

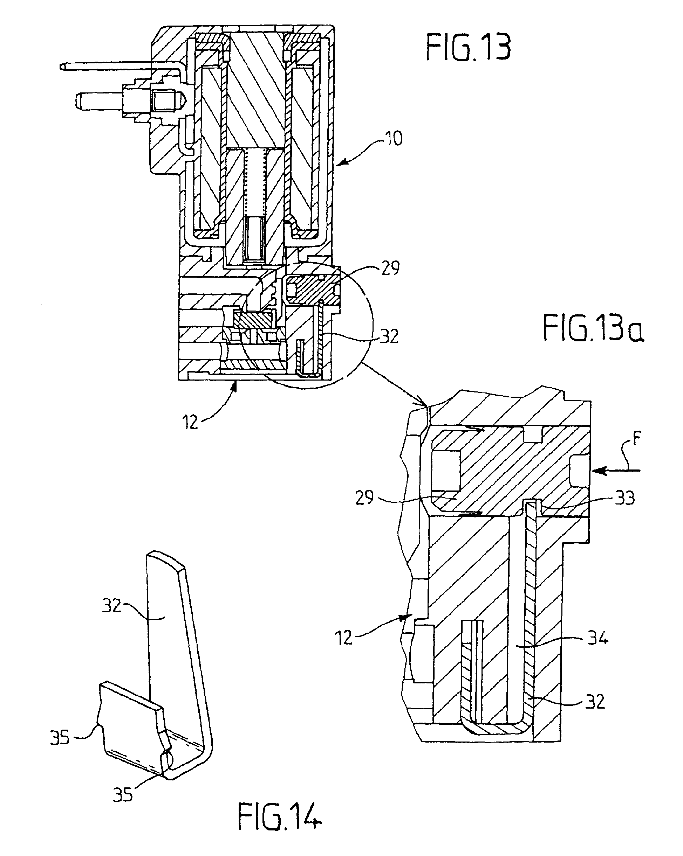

- la figure 13 est une vue, en coupe axiale verticale, d'une électrovanne dans laquelle, selon l'invention, la commande manuelle est munie d'un moyen de rappel réalisé sous la forme d'une lame en acier à ressort ;
- la figure 13a illustre, à plus grande échelle, un détail de la figure 13 et
- la figure 14 est une vue en perspective du moyen de rappel mis en oeuvre dans l'électrovanne représentée sur la figure 13.

En se référant aux dessins, on voit que la présente invention se réfère à une électrovanne comportant, d'une part un sous-ensemble électro-aimant désigné dans son ensemble par la référence 10 et, d'autre part un sous-ensemble de commutation pneumatique désigné dans son ensemble par la référence 12. Des moyens assurent l'assemblage des deux sous-ensemble 10 et 12 et, ainsi qu'on l'a mentionné ci-dessus, la présente invention se réfère notamment à de tels moyens.

Le sous-ensemble de commutation pneumatique 12 est constitué d'un corps enfermant un clapet 14, réalisé en élastomère, qui est emprisonné entre deux sièges d'étanchéité 15, 16, en vis-à-vis. Le mouvement du clapet 14 dans le corps du sous-ensemble de commutation pneumatique est provoqué, d'une part par un ressort 17 positionné dans le noyau mobile 18 du sous-ensemble électro-aimant 10, par l'intermédiaire d'un poussoir et, d'autre part par un moyen de rappel du clapet.

En position repos, c'est-à-dire lorsque l'électro-aimant n'est pas alimenté, le ressort 17 repousse le noyau mobile 18 de manière que celui-ci vienne plaquer le clapet 14, par l'intermédiaire de son poussoir, sur le siège 16 de la voie inférieure de l'électrovanne.

En position électrovanne ouverte, c'est-à-dire lorsque l'électro-aimant est alimenté, l'effort magnétique qu'il génère dans le noyau mobile 18 est plus important que l'effort du ressort 17 et dans ces conditions, le noyau mobile vient se coller sur le noyau fixe 19 du sous-ensemble 10 et il n'exerce plus d'effort sur le clapet 14. Le moyen de rappel du clapet 14 plaque alors ce dernier sur le siège supérieur 15 du sous-ensemble 12.

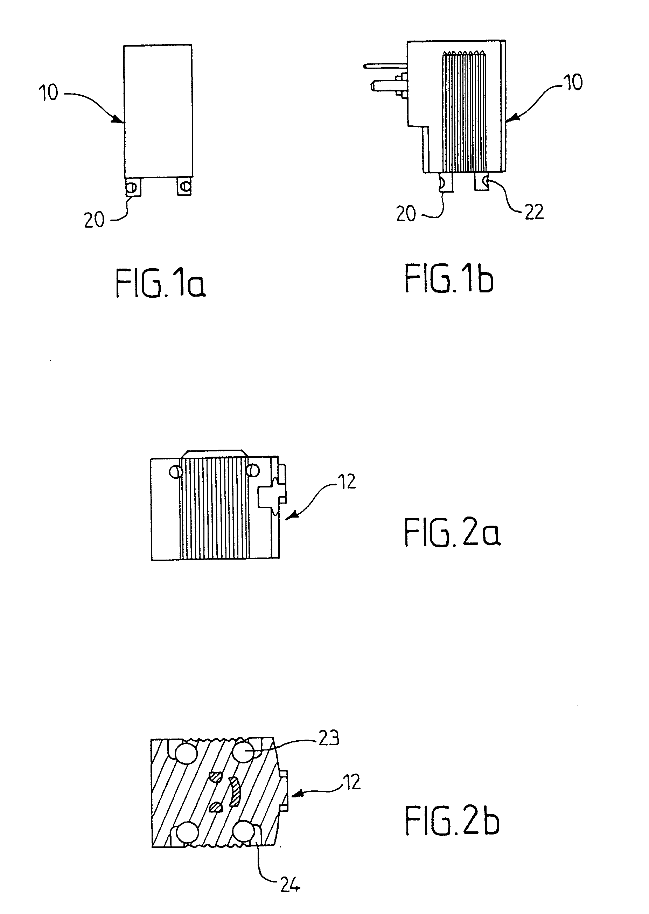

La présente invention vise en premier lieu un moyen d'assemblage mécanique du sous-ensemble électro-aimant 10 sur le sous-ensemble de commutation pneumatique 12. Un exemple de réalisation de ce moyen d'assemblage est illustré par les figures 1a à 4a.

Comme on le voit sur ces figures, le sous-ensemble électro-aimant 10 comporte, au niveau de son plan d'assemblage avec le sous-ensemble de commutation magnétique 12, quatre plots cylindriques 20 qui sont conçus de façon à recevoir des billes telles que 21 dans des cavités transversales 22 aménagées sur la génératrice respective des plots et se terminant chacune par un tronc de sphère.

Le sous-ensemble de commutation pneumatique 12 comporte, au niveau de son plan d'assemblage avec le sous-ensemble électro-aimant 10, quatre cavités cylindriques 23 qui sont conçues de façon à recevoir les plots 20 du sous-ensemble électro-aimant 10. Des cavités transversales 24 sont aménagées sur le corps du sous-ensemble de commutation pneumatique 12 et ces cavités 24 viennent mourir sur une génératrice respective des cavités cylindriques 23 destinées à recevoir les plots 20. Chaque extrémité de cavités telles que 24 se termine par un tronc de sphère, la disposition étant telle, qu'après pré-montage l'un sur l'autre des deux sous-ensembles 10 et 12, les cavités transversales 22 des plots 20 tombent en regard des cavités transversales 24 du sous-ensemble de commutation pneumatique 12 formant ainsi respectivement un logement pour une bille 21.

Afin de générer un effort de maintien entre les deux sous-ensembles 10 et 12, comme le ferait par exemple un assemblage par vis selon la technique antérieure, les cavités transversales 22 et 24 sont excentrées respectivement les unes par rapport aux autres afin que chaque bille telle que 21, en place dans son logement, génère une légère déformation des plots 20, jusqu'à ce que les cavités transversales soient en regard les unes des autres.

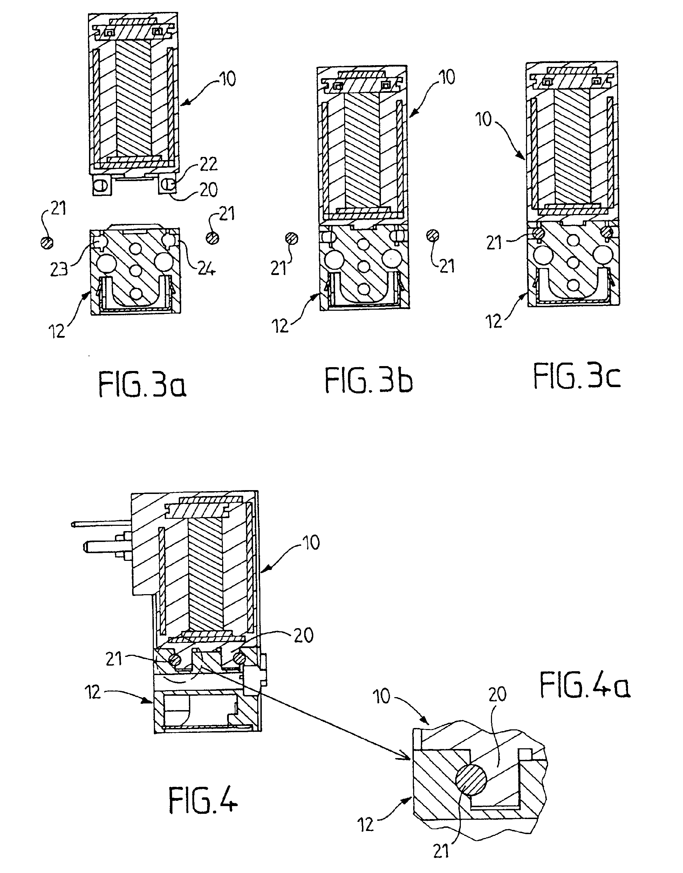

Les figures 3a à 3c illustrent les différentes étapes de l'assemblage de l'ensemble 10 sur l'ensemble 12. La figure 4 représente l'assemblage après réalisation et le détail de la figure 4 montre une bille 21 en place dans son logement délimité par les cavités transversales 22 des plots tels que 20 et les cavités transversales 24 du sous-ensemble de commutation pneumatique 12.

Le système d'assemblage ainsi décrit est très simple à réaliser et à mettre en oeuvre étant donné que les billes 21, qui en assurent le verrouillage et qui peuvent être réalisées en acier ou en tout autre matériau, n'exigent aucune orientation pour leur assemblage, ce qui permet d'éviter des investissements très importants, une simple presse manuelle permettant de mettre en oeuvre cette technique originale d'assemblage. Par ailleurs, l'automatisation de l'assemblage est très facile à réaliser compte tenu du fait qu' il est possible d'effectuer facilement, pour un coût modique, une alimentation automatique des billes telles que 21.

L'indémontabilité de l'assemblage, c'est-à-dire des billes 21, est obtenue, selon l'invention, par le fait que chaque cavité transversale 24 du sous-ensemble de commutation pneumatique 12 présente un diamètre inférieur au diamètre des billes telles que 21, ce qui rend impossible le démontage de ces dernières par n'importe quel type d'outil, sans détruire l'électrovanne.

Du fait de la forme des plots 20 ainsi que des cavités 23, il est très facile de mettre en oeuvre ce mode d'assemblage avec des pièces usinées, par exemple dans le cas où l'on souhaiterait utiliser le sous-ensemble électro-aimant 10 sur un sous-ensemble de commutation 12 métallique.

Ainsi qu'on l'a mentionné ci-dessus, les électrovannes connues comportent un moyen de rappel du clapet qui permet de plaquer ce dernier sur le siège supérieur 15 du sous-ensemble de commutation pneumatique 12 lorsque l'électrovanne est en position ouverte, c'est-à-dire lorsque l'électro-aimant est alimenté. Dans l'état actuel de la technique, ce moyen de rappel est réalisé sous la forme d'un ressort qui est situé sous le clapet et qui est en appui autour du siège inférieur du sous-ensemble de commutation pneumatique.

La présente invention se propose de supprimer ce ressort et de remplacer son effet par une fonction « rappel élastique » qui est intégrée dans le porte-clapet de l'électrovanne. Cette solution permet de réduire les coûts du fait de la suppression du ressort et de la main-d'oeuvre nécessaire à sa mise en place.

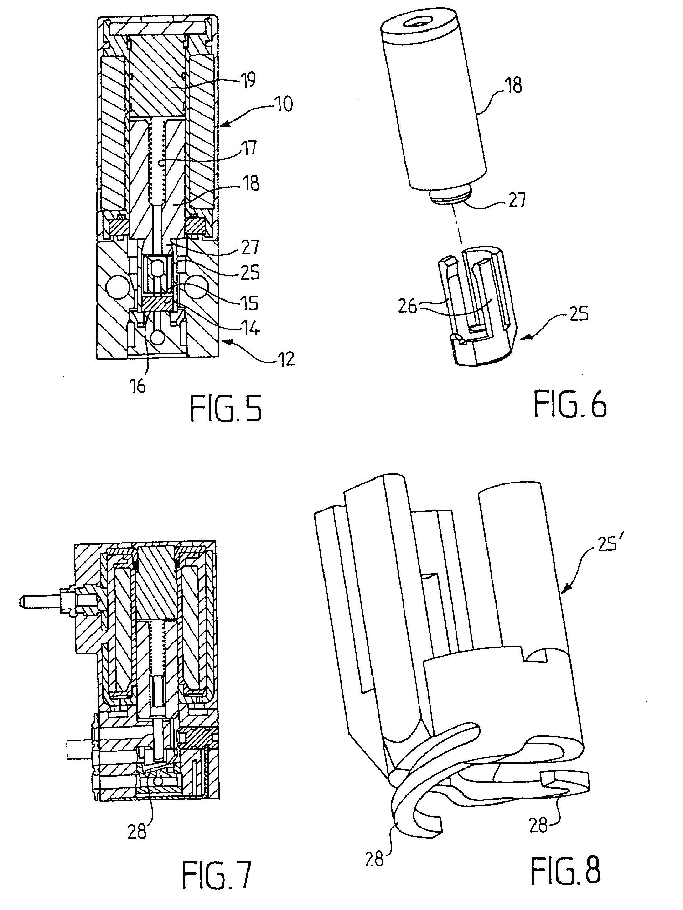

Les figures 5 à 8 illustrent des exemples de réalisation non limitatifs de cette fonction ressort élastique.

Dans le mode de réalisation illustré par les figures 5 et 6, le clapet 14 du sous-ensemble de commutation pneumatique 12 est attelé au noyau mobile 18 du sous-ensemble électro-aimant 12 par un accouplement élastique afin de garantir, lors de l'ouverture de l'électrovanne par mise sous tension du sous-ensemble électro-aimant 10, que le clapet 14 viendra bien se plaquer sur le siège supérieur 15 et donc que le siège 16 de la voie inférieure de l'électrovanne soit ouvert, ceci même sans pression. La fonction rappel élastique ainsi réalisée entre le noyau mobile 18 et le clapet 14 permet de garantir à la fois le contact du clapet 14 sur son siège supérieur 15 et le contact du noyau mobile 18 sur le noyau fixe 19 du sous-ensemble électro-aimant 10.

La raison pour laquelle il est nécessaire de garantir un contact des deux noyaux 18 et 19 du sous-ensemble électro-aimant 10 est la limitation de la montée en température de ce sous-ensemble lors de l'alimentation de ce dernier. La raison pour laquelle il convient de garantir un contact du clapet 14 sur son siège supérieur 15 lors de l'alimentation du sous-ensemble électro-aimant 10 est la garantie d'assurer l'étanchéité de cette voie supérieure.

Ainsi qu'on le voit sur les figures 5 et 6, cette liaison élastique est obtenue selon cet exemple de réalisation de l'invention, à l'aide d'une pièce d'attelage, désignée dans son ensemble par la référence 25, qui forme porte-clapet et qui est munie de pattes telles que 26 (figure 6) venant s'accrocher sur une saillie de forme conique 27 qui est prévue à l'extrémité du noyau mobile 18 du sous-ensemble électro-aimant 10. La déformation de cet attelage porte-clapet 25 / noyau 18 permet également, lors de l'ouverture de l'électrovanne, de garantir la fermeture du siège supérieur 15.

On notera que la solution décrite ci-dessus qui permet effectivement de supprimer le ressort sous clapet des électrovannes selon l'état antérieur de la technique, d'une part réduit le nombre de composants de cette électrovanne, et d'autre part permet de s'affranchir de la tolérance de fabrication sur les efforts du ressort qui génèrent des contraintes supplémentaires entraînant une pénalisation des performances pneumatiques de l'électrovanne.

Cette solution présente donc un intérêt économique indéniable.

Dans le second exemple de réalisation, illustré par les figures 7 et 8, la fonction rappel élastique du clapet 24 est intégrée dans le porte-clapet 25'. Celui-ci est réalisé de préférence en matière plastique et il est muni à sa partie inférieure de lames de ressort de forme hélicoïdale telles que 28 venant au contact de part et d'autre du siège inférieur du sous-ensemble de commutation pneumatique 12. L'élasticité de ces lames de ressort permet de garantir la fonction rappel élastique du clapet.

Ainsi qu'on l'a décrit ci-dessus, l'électrovanne est actionnée par l'alimentation du sous-ensemble électro-aimant 10. Il est cependant prévu, comme dans la technique antérieure, une commande manuelle permettant d'actionner l'électrovanne sans avoir recours à une alimentation de ce sous-ensemble 10. Selon l'état antérieur de la technique, cette commande manuelle est obtenue à l'aide d'une pièce présentant une forme cylindrique et devant assurer deux fonctions :
- le déplacement du clapet du siège inférieur vers le siège supérieur, ceci grâce à une pente ménagée en bout de la commande manuelle qui, lors de l'actionnement de cette dernière par un mouvement de translation, transmet un mouvement linéaire perpendiculaire à son mouvement de translation, ce mouvement linéaire perpendiculaire étant transmis au clapet par l'intermédiaire du porte-clapet et du noyau mobile ;
- une fonction d'étanchéité de l'ensemble de commutation pneumatique 12, ceci même lors de son actionnement.

Dans les solutions actuellement utilisées, la fonction étanchéité est assurée à l'aide d'un joint torique qui est monté dans une gorge prévue sur la commande manuelle. La présente invention se propose d'apporter une solution permettant une suppression de ce joint torique, ce qui se traduit par une réduction des coûts de revient résultant de cette suppression et de celle de la main-d'oeuvre nécessaire à la mise en place d'un tel joint. La solution apportée par la présente invention consiste à intégrer la fonction d'étanchéité dans la commande manuelle.

Dans l'exemple de réalisation illustré par les figures 9 à 10, cette fonction d'étanchéité est obtenue à l'aide d'une lèvre 30 qui est intégrée sur la pièce cylindrique 29 constituant la commande manuelle. Afin de garantir une bonne étanchéité, la lèvre 30 doit être suffisamment souple pour épouser les parois du logement de la commande manuelle (voir la figure 9a) tout en étant suffisamment dure pour ne pas s'affaisser lors de l'actionnement de la commande manuelle. De préférence, cette commande manuelle 29 intégrant la lèvre 30 sera réalisée en une matière thermoplastique élastomère.

Un autre exemple de réalisation de cette commande manuelle intégrant la fonction d'étanchéité est illustré par les figures 11 à 12. Dans cet exemple de réalisation, la fonction d'étanchéité intégrée est obtenue à l'aide d'une forme en tronc de tore 31, équivalente à une forme de joint torique, qui est réalisée sur la périphérie de la commande manuelle 29'. Le matériau constituant la commande manuelle 29' doit répondre aux mêmes exigences que celles mentionnées ci-dessus à propos de la commande manuelle 29 et dans ces conditions, il est préférable de réaliser cette commande manuelle 29' en thermoplastique élastomère.

Dans les électrovannes auxquelles s'applique la présente invention, on prévoit des moyens permettant un retour en position initiale de la commande manuelle lorsque celle-ci n'est plus actionnée. Dans l'état antérieur de la technique, ces moyens sont réalisés sous la forme d'un ressort qui est situé à l'une des extrémités de la commande manuelle de façon à repousser cette dernière dans sa position initiale, permettant ainsi au clapet du sous-ensemble de commutation pneumatique d'être libéré de cette commande manuelle. La position initiale de la commande manuelle est généralement obtenue à l'aide d'une pièce supplémentaire formant butée, par exemple une goupille, car il n'est possible de monter la commande manuelle dans son logement que de l'extérieur du corps du sous-ensemble de commutation pneumatique. Il est donc nécessaire d'ajouter la butée après montage de la commande manuelle.

La présente invention se propose de supprimer le ressort de retour en position initiale de la commande manuelle ainsi que la butée de cette dernière, ces deux fonctions étant obtenues à l'aide d'un élément unique. Par ailleurs, la solution apportée par l'invention et qui est décrite ci-après, permet d'obtenir une fonction ressort plus facile à manipuler ou à distribuer de façon automatique, ce qui permet de réduire les coûts.

Un exemple de réalisation de ce moyen de rappel de la commande manuelle est illustré par les figures 13 à 14.

Comme on le voit sur ces figures, ce moyen de rappel est réalisé sous la forme d'une petite lame 32 en acier à ressort. Cette lame comporte deux branches : l'une encastrée, par l'une de ses extrémités, dans le corps du sous-ensemble 12 de commutation pneumatique, et l'autre logée, à son extrémité, dans une gorge de retenue 33 prévue à cet effet dans la commande manuelle 29.

Ainsi qu'on le voit sur la figure 4, l'extrémité de lame ressort 32 qui est encastrée dans le corps du sous-ensemble de commutation pneumatique 12 peut être munie d'ergots de retenue 35.

Par ailleurs, dans le corps du sous-ensemble 12, sous le logement de la commande manuelle 29, est prévue une cavité 34, recevant la lame ressort 32, tout en lui permettant un certain débattement en flexion, cette disposition étant adoptée pour les motifs exposés ci-après.

En position repos, c'est-à-dire lorsque la commande manuelle 29 n'est pas actionnée, la lame ressort 32 vient en butée sur la face externe de la cavité 34 (position illustrée par la figure 13a). Lors de l'actionnement de la commande manuelle selon la flèche F, la lame ressort 32 se déforme par flexion et elle exerce un mouvement à l'encontre du déplacement selon F de la commande manuelle, mais cet effort est bien inférieur à celui nécessaire à l'actionnement de cette commande manuelle. Lors du relâchement de la commande manuelle, l'effort généré par la lame ressort ramène la commande manuelle dans sa position repos, jusqu'à ce que la lame 32 revienne en butée sur la face externe de sa cavité 34.

Il demeure bien entendu que la présente invention n'est pas limitée aux exemples de réalisation décrits et représentés ci-dessus.

## Revendications

1. - Electrovanne comportant un sous-ensemble électro-aimant (10) et un sous-ensemble de commutation pneumatique (12) à clapet (14), qui est associé mécaniquement audit sous-ensemble électro-aimant (10), le sous-ensemble de commutation pneumatique (12) étant constitué d'un corps enfermant le clapet (14) emprisonné entre deux sièges d'étanchéité (15, 16) en vis-à-vis, le mouvement dudit clapet étant provoqué, d'une part par un ressort (17) situé dans le noyau mobile (18) du sous-ensemble étectro-aimant (10), par l'intermédiaire d'un poussoir, et d'autre part par un moyen (25,25') venant plaquer le clapet (14) sur le siège supérieur (15) du sous-ensemble de commutation pneumatique (12) lorsque l'électro-aimant est alimenté, cette électrovanne étant **caractérisée en ce que** ledit sous-ensemble électro-aimant (10) comporte au niveau de son plan d'assemblage sur le sous-ensemble de commutation pneumatique (12), quatre plots cylindriques (20) munis chacun d'une cavité transversale (22) aménagée sur la génératrice du plot (20) et se terminant par un tronc de sphère et **en ce que** le sous-ensemble de commutation pneumatique (12) comporte, au niveau de son plan d'assemblage avec le sous-ensemble électro-aimant (10), quatre cavités cylindriques (23), conçues de façon à recevoir les plots (20) du sous-ensemble électro-aimant (10), des cavités transversales (24) étant aménagées sur le corps du sous-ensemble de commutation pneumatique (12), ces cavités (24) venant mourir sur la génératrice respective des cavités (23) recevant les plots (20) et, l'extrémité de chacune desdites cavités (24) se termine par un tronc de sphère, de façon qu'après assemblage des deux sous-ensembles (10, 12), les cavités transversales (22) des plots (20) du sous-ensemble électro-aimant (10) tombent en regard des cavités transversales (24) dudit sous-ensemble de commutation pneumatique (12) en délimitant des logements recevant chacun une bille (21).

2. - Electrovanne selon la revendication 1, **caractérisée en ce que** chaque cavité transversale (24) du sous-ensemble de commutation pneumatique (12) présente un diamètre inférieur au diamètre des billes (21).

3. - Electrovanne selon la revendication 1, **caractérisée en ce que** le moyen venant plaquer le clapet (14) sur le siège supérieur (15) du sous-ensemble de commutation pneumatique (12) est réalisé sous le forme d'une fonction rappel élastique intégrée dans le poussoir-clapet.

4. - Electrovanne selon la revendication 3, **caractérisée en ce que** ladite fonction rappel élastique intégrée dans le poussoir-clapet est réalisée sous la forme d'une pièce d'attelage (25;25') formant porte-clapet qui est pourvue de pattes (26) venant s'accrocher sur une saillie conique (27) dont est pourvue l'extrémité du noyau mobile (18) du sous-ensemble électro-élément (10), formant ainsi un accouplement élastique.

5. - Electrovanne selon la revendication 3, **caractérisée en ce que** ladite fonction rappel élastique est réalisée sous forme de lames de ressort de forme hélicoïdale (28) intégrées dans le porte-clapet (25') et venant au contact de part et d'autre du siège inférieur (16) du sous-ensemble de commutation pneumatique (12).

6. - Electrovanne selon la revendication 1, **caractérisée en ce qu'**elle comporte une commande manuelle (29; 29') constituée d'une pièce de forme cylindrique assurant d'une part le déplacement du clapet (14) du siège inférieur (16) vers le siège supérieur (15) et, d'autre part l'étanchéité du sous-ensemble de commutation pneumatique (12) par une fonction d'étanchéité intégrée dans ladite commande manuelle (29;29').

7. - Electrovanne selon la revendication 6, **caractérisée en ce que** ladite fonction d'étanchéité est obtenue en ménageant une lèvre circulaire souple (30) sur la pièce constituant la commande manuelle (29), cette lèvre épousant la forme des parois du logement de ladite commande manuelle (29).

8. - Electrovanne selon la revendication 6, **caractérisée en ce que** ladite fonction d'étanchéité est obtenue en prévoyant sur la pièce cylindrique constituant la commande manuelle (29'), une forme de tronc de tore (31) équivalent à une forme de joint torique.

9. - Electrovanne selon l'une des revendications 6 à 8, **caractérisée en ce que** la pièce cylindrique constituant la commande manuelle (29 ; 29') est réalisée en un matériau thermoplastique élastomère.

10. - Electrovanne selon la revendication 6, **caractérisée en ce que** ladite commande manuelle est munie d'un moyen de rappel assurant son retour en position initiale, lorsqu'elle n'est plus actionnée, ce moyen de rappel étant réalisé sous la forme d'une lame en acier à ressort (32) encastrée, à l'une de ses extrémités, dans le corps du sous-ensemble de commutation pneumatique (12) et logée, à son autre extrémité, dans une gorge de retenue (33) ménagée dans la commande manuelle (29).

11. - Electrovanne selon la revendication 10, **caractérisée en ce que** ladite lame en acier à ressort (32) comporte deux branches, l'une de celles-ci étant encastrée à l'une de ses extrémités dans le corps du sous-ensemble de commutation pneumatique (12) et l'autre étant logée à son extrémité dans ladite gorge de retenue (33) ménagée dans ladite commande manuelle (29).

12. - Electrovanne selon la revendication 11, **caractérisée en ce que** l'extrémité de branche de ladite lame (32), encastrée dans le corps du sous-ensemble de commutation pneumatique (12), est munie d'ergots de retenue (35).

13. - Electrovanne selon la revendication 10, **caractérisée en ce qu**'elle comporte, dans le corps du sous-ensemble de commutation pneumatique (12), sous le logement de la commande manuelle (29), une cavité (34) recevant l'une des branches de ladite la lame ressort (32), en lui permettant un certain débattement en flexion.

## Claims

1. Solenoid valve comprising an electromagnetic subassembly (10) and a pneumatic switching assembly (12) with a shutter (14), which is associated mechanically with the electromagnetic subassembly (10), the pneumatic switching subassembly (12) consisting of a body enclosing the shutter (14) captive between two facing sealing seats (15, 16), the movement of the said shutter being caused on the one hand by a spring (17) situated in the moving core (18) of the electromagnetic subassembly (10) by means of a pusher, and on the other hand by a means (25, 25') coming to press the shutter (14) on the top seat (15) of the pneumatic switching subassembly (12) when the electromagnetic is supplied, this solenoid valve being **characterised in that** the said electromagnetic subassembly (10) has, at its connection plane on the pneumatic switching subassembly (12), four cylindrical studs (20) each provided with a transverse cavity (22) arranged on the generatrix of the stud (20) and terminating in a truncated sphere, and **in that** the pneumatic switching subassembly (12) comprises, at its plane for assembly with the electromagnetic subassembly (10), four cylindrical cavities (23), designed so as to receive the studs (20) of the electromagnetic subassembly (10), transverse cavities (24) being formed on the body of the pneumatic switching subassembly (12), these cavities (24) ending on the respective generatrix of the cavities (23) receiving the studs (20), and the end of each of the said cavities (24) terminates in a truncated sphere, so that, after assembly of the two subassemblies (10, 12), the transverse cavities (22) of the studs (20) of the electromagnetic subassembly (10) fall opposite the transverse cavities (24) of the said pneumatic switching subassembly (12), delimiting housings each receiving a ball (21).

2. Solenoid valve according to claim 1, **characterised in that** each transverse cavity (24) of the pneumatic switching subassembly (12) has a diameter less than the diameter of the balls (21).

3. Solenoid valve according to claim 1, **characterised in that** the means pressing the valve (14) on the top seat (15) of the pneumatic switching subassembly (12) is produced in the form of an elastic return function integrated in the pusher/shutter.

4. Solenoid valve according to claim 3, **characterised in that** the said elastic return function integrated in the pusher/shutter is produced in the form of a coupling piece (25 ; 25') forming a shutter carrier that is provided with lugs (26) hooking onto a conical projection (27) with which the end of the moving core (18) of the electromagnet subassembly (10) is provided, thus forming an elastic coupling.

5. Solenoid valve according to claim 3, **characterised in that** the said elastic return function is produced in the form of helical-shaped spring blades (28) integrated in the shutter holder (25') and coming into contact on each side of the bottom seat (16) of the pneumatic switching subassembly (12).

6. Solenoid valve according to claim 1, **characterised in that** it comprises a manual control (29; 29') consisting of a cylindrically shaped piece providing on the one hand the movement of the shutter (14) from the bottom seat (16) towards the top seat (15) and on the other hand the sealing of the pneumatic switching subassembly (12) by a sealing function integrated in the said manual control (29; 29').

7. Solenoid valve according to claim 6, **characterised in that** the said sealing function is obtained by providing a flexible circular lip (30) on the piece constituting the manual control (29), this lip matching the shape of the walls of the housing of the said manual control (29).

8. Solenoid valve according to claim 6, **characterised in that** the said sealing function is obtained by providing, on the cylindrical piece constituting the manual control (29'), the shape of a truncated torus (31) equivalent to an O-ring seal shape.

9. Solenoid valve according to one of claims 6 to 8, **characterised in that** the cylindrical piece constituting the manual control (29; 29') is produced from an elastomeric thermoplastic material.

10. Solenoid valve according to claim 6, **characterised in that** the said manual control is provided with a return means providing its return to its initial position, when it is no longer actuated, this return means being produced in the form of a spring steel blade (32) embedded, at one of its ends, in the body of the pneumatic switch subassembly (12) and housed at its other end in a retaining groove (33) formed in the manual control (29).

11. Solenoid valve according to claim 10, **characterised in that** the said spring steel blade (32) comprises two arms, one of these being embedded at one of its ends in the body of the pneumatic switching subassembly (12) and the other being housed at its end in the said retaining groove (33) formed in the said manual control (29).

12. Solenoid valve according to claim 11, **characterised in that** the arm end of the said blade (32) embedded in the body of the pneumatic switching assembly (12) is provided with retaining brackets (35).

13. Solenoid valve according to claim 10, **characterised in that** it comprises, in the body of the pneumatic switching subassembly (12), under the manual control housing (29), a cavity (34) receiving one of the arms of the said spring blade (32), permitting a certain bending movement for it.

## Patentansprüche

1. Elektroventil mit einer elektromagnetischen Untervorrichtung (10) und einer pneumatischen Umschalt-Untervorrichtung (12) mit Klappe (14), die mechanisch mit der elektromagnetischen Untervorrichtung (10) verbunden ist, wobei die pneumatischen Umschalt-Untervorrichtung (12) einen Körper aufweist, der die Klappe (14) zwischen zwei einander gegenüberliegenden Dichtsitzen (15,16) einschließt, wobei die Bewegung der Klappe einerseits durch eine in dem beweglichen Kern (18) der elektromagnetischen Untervorrichtung (10) angeordnete Feder (17) mittels einer Druckvorrichtung und andererseits durch eine Vorrichtung (25,25') bewirkt wird, die bei Aktivierung des Elektromagneten die Klappe (14) auf den oberen Sitz (15) der pneumatischen Umschalt-Untervorrichtung (12) drückt,
wobei dieses Elektroventil **dadurch gekennzeichnet ist, dass** die elektromagnetische Untervorrichtung (10) in Höhe der Zusammenbauebene an der pneumatischen Umschalt-Untervorrichtung (12) vier zylindrische Vorsprünge (20) aufweist, die jeweils mit einem querverlaufenden Hohlraum (22) versehen sind, welcher auf der Mantellinie des Vorsprungs (20) angeordnet ist, und mit einem gerundeten Stumpf enden, und dass die pneumatische Umschalt-Untervorrichtung (12) in Höhe der Zusammenbauebene an der elektromagnetischen Untervorrichtung (10) vier zylindrische Hohlräume (23) aufweist, die derart ausgebildet sind, dass sie die Vorsprünge (20) der elektromagnetischen Untervorrichtung (10) aufnehmen, wobei an dem Körper der pneumatischen Umschalt-Untervorrichtung (12) querverlaufende Hohlräume (24) angeordnet sind, die an der betreffenden Mantellinie der die Vorsprünge (20) aufnehmenden Hohlräume (23) enden, und der Endbereich jedes der Hohlräume (24) mit einem runden Stumpf endet, derart, dass nach dem Zusammenfügen der beiden Untervorrichtungen (10,12) die querverlaufenden Hohlräume (22) der Vorsprünge (20) der elektromagnetischen Untervorrichtung (10) mit den querverlaufenden Hohlräume (24) der pneumatischen Umschalt-Untervorrichtung (12) in Gegenüberlage gelangen und dabei Aufnahmebereiche begrenzen, die jeweils eine Kugel (21) aufnehmen.

2. Elektroventil nach Anspruch 1, **dadurch gekennzeichnet, dass** jeder querverlaufende Hohlraum (24) der pneumatischen Umschalt-Untervorrichtung (12) einen Durchmesser hat, der kleiner als der Durchmesser der Kugeln (21) ist.

3. Elektroventil nach Anspruch 1, **dadurch gekennzeichnet, dass** die Vorrichtung zum Aufbringen der Klappe (14) auf den oberen Sitz (15) der pneumatischen Umschalt-Untervorrichtung (12) als in die Druckvorrichtung/Klappe integrierte elastische Rückstellfunktion realisiert ist.

4. Elektroventil nach Anspruch 3, **dadurch gekennzeichnet, dass** die in die Druckvorrichtung/Klappe integrierte elastische Rückstellfunktion als eine Klappenhaltevorrichtung bildendes Ankupplungsstück (25;25') realisiert ist, das mit Klauen (26) versehen ist, die an einem konischen Vorsprung (27) angreifen, an dem das Ende des beweglichen Kerns (18) der elektromagnetischen Untervorrichtung (10) angeordnet ist, so dass eine elastische Verbindung gebildet wird.

5. Elektroventil nach Anspruch 3, **dadurch gekennzeichnet, dass** die elastische Rückstellfunktion durch schraubenlinienförmige Federblätter (28) realisiert ist, die in die Klappenhaltevorrichtung (25') integriert sind und sich in Kontakt mit einem beliebigen Bereich des unteren Sitzes (16) der pneumatischen Umschalt-Untervorrichtung (12) befinden.

6. Elektroventil nach Anspruch 1, **dadurch gekennzeichnet, dass** es ein Handsteuerteil (29,29') aufweist, das aus einem zylindrisch geformten Teil besteht, welches einerseits die Verlagerung der Klappe (14) von dem unteren Sitz (16) zu dem oberen Sitz (15) gewährleistet und andererseits die Dichtigkeit der pneumatischen Umschalt-Untervorrichtung (12) mittels einer in das Handsteuerteil (29,29') integrierten Dichtungsfunktion gewährleistet.

7. Elektroventil nach Anspruch 6, **dadurch gekennzeichnet, dass** die Dichtungsfunktion erzielt wird durch Anordnung einer kreisförmigen weichen Lippe (30) auf dem das Handsteuerteil (29) bildenden Teil, wobei die Lippe sich an die Form von Haltewänden des Handsteuerteils (29) anschmiegt.

8. Elektroventil nach Anspruch 6, **dadurch gekennzeichnet, dass** die Dichtungsfunktion erzielt wird, indem an dem das Handsteuerteil (29') bildenden zylindrischen Teil eine toroide Kegelform (31) ausgebildet ist, die einem Dichtring äquivalent ist.

9. Elektroventil nach einem der Ansprüche 6 bis 8, **dadurch gekennzeichnet, dass** das zylindrische Teil, welches das Handsteuerteil (29;29') bildet, aus einem thermoplastischen Elastomermaterial ausgebildet ist.

10. Elektroventil nach Anspruch 6, **dadurch gekennzeichnet, dass** das Handsteuerteil mit einer Rückstellvorrichtung versehen ist, die seine Rückkehr in die Ausgangsposition gewährleistet, wenn sie nicht betätigt wird, wobei diese Rückstellvorrichtung in Form einer Stahl-Blattfeder (32) realisiert ist, die an einem ihrer Enden in den Körper der pneumatischen Umschalt-Untervorrichtung (12) eingesetzt ist und an ihrem anderen Ende in einer im Handsteuerteil (29) ausgebildeten Rückhaltenut (33) angeordnet ist.

11. Elektroventil nach Anspruch 10, **dadurch gekennzeichnet, dass** die Stahl-Blattfeder (32) zwei Zweige aufweist, von denen einer an einem seiner Enden in den Körper der pneumatischen Umschalt-Untervorrichtung (12) eingesetzt ist und der andere an seinem Ende in der im Handsteuerteil (29) ausgebildeten Rückhaltenut (33) angeordnet ist.

12. Elektroventil nach Anspruch 11, **dadurch gekennzeichnet, dass** das in den Körper der pneumatischen Umschalt-Untervorrichtung (12) eingesetzte Ende des Zweigs der Feder (32) mit Haltevorsprüngen (35) versehen ist.

13. Elektroventil nach Anspruch 10, **dadurch gekennzeichnet, dass** sie in dem Körper der pneumatischen Umschalt-Untervorrichtung (12) unter dem Sitz des Handsteuerteils (29) einen Hohlraum (34) aufweist, der einen der Zweige der Blattfeder (32) aufnimmt und ihr dabei eine gewisse flexible Ausfederung erlaubt.
